Europäisches Patentamt

European Patent Office

Office européen des brevets

(11) Veröffentlichungsnummer: **0 425 836 A2**

# EUROPÄISCHE PATENTANMELDUNG

(21) Anmeldenummer: 90119069.4

(22) Anmeldetag: 04.10.90

(51) Int. Cl.⁵: **B23Q 11/08, B21D 11/20**

(30) Priorität: 31.10.89 DE 3936213

(43) Veröffentlichungstag der Anmeldung:
08.05.91 Patentblatt 91/19

(84) Benannte Vertragsstaaten:
CH DE ES FR GB IT LI

(71) Anmelder: Gebr. Hennig GmbH
Dorfstrasse 41
W-8045 Ismaning(DE)

(72) Erfinder: Hennig, Kurt
Georgensteinstrasse 16
W-8000 München 71(DE)

(74) Vertreter: Tetzner, Volkmar, Dr.-Ing. Dr. jur.
Van-Gogh-Strasse 3
W-8000 München 71(DE)

(54) Verfahren zur Herstellung einer Teleskopabdeckung.

(57) Die Erfindung betrifft ein Verfahren zur Herstellung einer Teleskopabdeckung durch Abkanten eines ebenen Blechzuschnitts, wobei in diesem Blechzuschnitt eine rautenförmige Aussparung vorgesehen ist, die von der benachbarten Außenkante durch eine zusammenhängende Materialzone getrennt ist, die beim Abkantvorgang unter Bildung einer Eckzone mit abgerundeter Außenkontur rißfrei gestreckt wird.

EP 0 425 836 A2

## VERFAHREN ZUR HERSTELLUNG EINER TELESKOPABDECKUNG

Die Erfindung betrifft ein Verfahren (entsprechend dem Oberbegriff des Ansprüches 1) zur Herstellung einer Teleskopabdeckung sowie eine Teleskopabdeckung (gemäß dem Gattungsbegriff des Ansprüches 3).

Ein Verfahren zur Herstellung einer Teleskopabdeckung gemäß dem Oberbegriff des Ansprüches 1 sowie eine Teleskopabdeckung entsprechend dem Gattungsbegriff des Anspruches 3 sind Gegenstand der älteren Anmeldung PCT/EP 89/00244 der Anmelderin. Dieser Stand der Technik wird noch im einzelnen anhand der Figuren 1 bis 3 der Beschreibung erläutert. Bei diesem Verfahren wird bei Herstellung der rautenförmigen Aussparung im ebenen Blechzuschnitt die Materialzone zwischen der rautenförmigen Aussparung und der benachbarten, in der fertigen Teleskopabdeckung quer zur Längsrichtung der Abdeckung verlaufenden Außenkante des Blechzuschnittes durch einen Stanzschnitt getrennt, so daß die auf unterschiedlichen Seiten dieses Stanzschnittes befindlichen Abschnitte des Endbereiches sich beim Abkanten des Blechzuschnitts zusammen mit der Deckwand und der angrenzenden Seitenwand relativ zueinander frei bewegen können. Bei diesem Verfahren entsteht damit eine Abdekkung, deren über die Deckwand und die beiden Seitenwände nach außen vorstehender Endbereich in den beiden Eckzonen eine rechtwinklige Aussparung aufweist, die in einem gesonderten Fertigungsvorgang (etwa durch Verschweißen) anschließend wieder geschlossen werden muß, um die notwendige Abdichtung des Abdeckelementes in den Eckzonen des Endbereiches herzustellen.

Der Erfindung liegt die Aufgabe zugrunde, ein Verfahren (entsprechend dem Oberbegriff des Ansprüches 1) zur Herstellung einer Teleskopabdeckung sowie eine Teleskopabdeckung (gemäß dem Gattungsbegriff des Ansprüches 3) so auszubilden, daß sich ein an den Abkantvorgang anschließender gesonderter Arbeitsschritt zur Erzielung einer Abdichtung der beiden Eckzonen des Endbereiches erübrigt.

Diese Aufgabe wird erfindungsgemäß durch die kennzeichnenden Merkmale der Ansprüche 1 bzw. 3 gelöst. Zweckmässige Ausgestaltungen der Erfindung sind Gegenstand der Unteransprüche.

Erfindungsgemäß wird die rautenförmige Aussparung als eine geschlossene Ausnehmung hergestellt, die von der benachbarten, in der fertigen Teleskopabdeckung quer zur Längsrichtung der Abdeckung verlaufenden Außenkante des Blechzuschnittes durch eine zusammenhängende Materialzone getrennt ist. Erfindungsgemäß kommt somit der im Bereich dieser Materialzone bisher vorgesehene Stanzschnitt in Fortfall.

Die Breite dieser zusammenhängenden Materialzone (gemessen in Längsrichtung der Teleskopabdeckung) wird dabei unter Berücksichtigung der Stärke des Blechzuschnittes so gewählt, daß diese Materialzone beim Abkanten des Blechzuschnitts unter Bildung einer Eckzone mit abgerundeter Außenkontur rißfrei gestreckt wird.

Entgegen allen Erwartungen gelang es bei den der Erfindung zugrundeliegenden Versuchen, die genannte Materialzone beim Abkanten des Blechzuschnitts rißfrei zu strecken. Dabei erhält die Eckzone eine abgerundete Aussenkontur, die keiner weiteren Nachbearbeitung bedarf, wobei diese von dem gestreckten Material gebildete Eckzone die erforderliche Abdichtung des Endbereiches des Abdeckelementes gewährleistet.

Die abgerundete Außenkontur der beiden Eckzonen des Abdeckelementes erweist sich ferner für die Gleitbewegung des Abdeckelementes innerhalb der Teleskopabdeckung als vorteilhaft, zumal auch die Deckwand und die beiden Seitenwände des nächst größeren Abdeckelementes an ihren Abkantzonen einen gewissen Biegeradius aufweisen.

Die Erfindung wird im folgenden anhand einiger in der Zeichnung veranschaulichter Ausführungsbeispiele im Einzelnen erläutert.

Es zeigen

Fig.1 eine Aufsicht auf den bekannten Blechzuschnitt,

Fig. 2 einen Schnitt (längs der Linie II-II der Fig. 1) durch das Abdeckelement nach dem Falten des bekannten Blechzuschnitts gemäß Fig. 1,

Fig. 3 einen Schnitt (längs der Linie III-III der Fig. 2),

Fig. 4 bis 6 Aufsicht und Schnitte eines ersten Ausführungsbeispieles der Erfindung,

Fig. 7 bis 9 Aufsicht und Schnitte eines zweiten Ausführungsbeispieles der Erfindung,

Fig. 10 bis 12 Aufsicht und Schnitte eines dritten Ausführungsbeispieles der Erfindung.

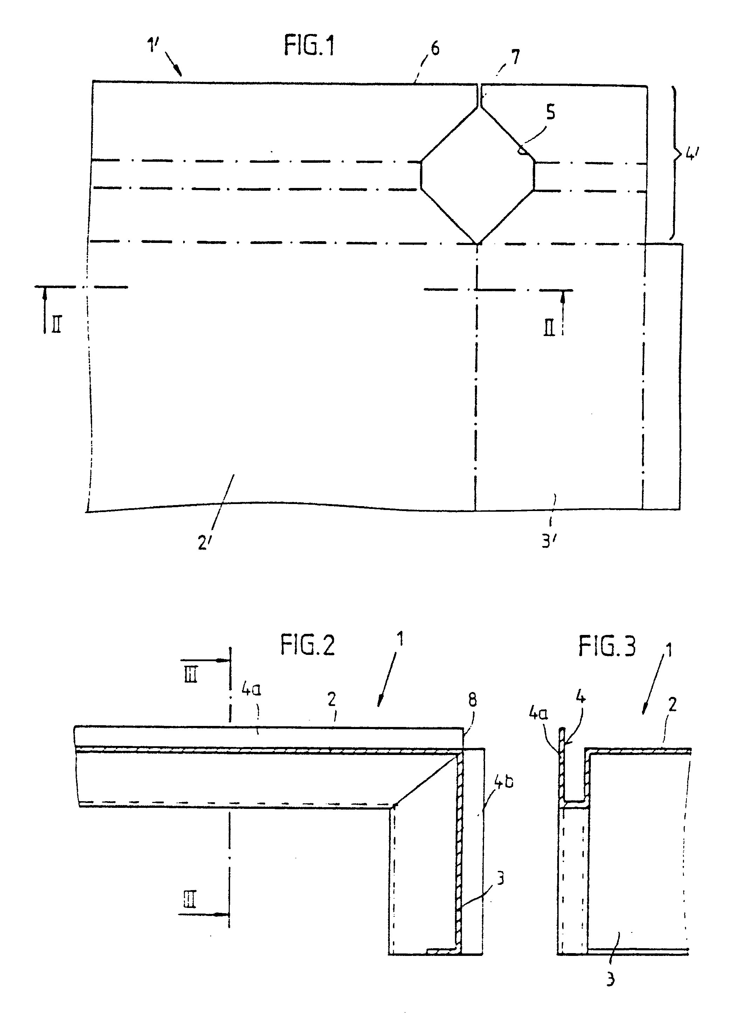

Das in den Fig. 2 und 3 in einem Teilschnitt veranschaulichte bekannte Abdeckelement 1 enthält eine Deckwand 2 und zwei Seitenwände 3 (von denen in Fig. 2 nur die rechte Seitenwand 3 sichtbar ist).

Das Abdeckeckelement 1 ist ferner mit einem Endbereich 4 versehen, der quer zur Längsrichtung der Teleskopabdeckung verläuft (d.h. senkrecht zur Zeichenebene der Fig. 3) und der mit seinen in Fig. 2 sichtbaren Abschnitten 4a bzw. 4b über die Deckwand 2 und die beiden Seitenwände 3 nach außen vorsteht.

Der Endbereich 4 ist im Querschnitt u-förmig abgebogen (vgl. Fig. 3), wobei der freie Schenkel des U, der die Abschnitte 4a und 4b bildet, nach außen weist.

Fig. 1 zeigt den zur Herstellung des Abdeckelementes gemäß den Fig. 2 und 3 benutzten ebenen Blechzuschnitt 1'. Dabei bildet die Zone 2' nach dem Abkanten des Zuschnitts die Deckwand 2, die Zone 3' die Seitenwand 3 und die Zone 4' den Endbereich 4.

In der Zone 4' des Blechzuschnittes 1' ist eine etwa rautenförmige Aussparung 5 vorgesehen, die das Abkanten des Blechzuschnitts 1' zu dem in den Fig. 2 und 3 veranschaulichten Abdeckelement 1 ermöglicht.

Die Linien, längs deren der Blechzuschnitt 1' abgekantet wird, sind in Fig. 1 strichpunktiert dargestellt.

Bei dem in Fig. 1 veranschaulichten bekannten Blechzuschnitt 1' ist nun zwischen der Aussparung 5 und der benachbarten Außenkante 6 des Blechzuschnitts ein Stanzschnitt 7 vorgesehen. Er ermöglicht zwar ein freies Abkanten des Blechzuschnitts 1', führt jedoch im fertigen Produkt zu einer störenden Aussparung 8 in den beiden Eckzonen. Diese Aussparung 8 muß nachträglich in einem gesonderten Arbeitsgang in geeigneter Weise (etwa durch Verschweißen) verschlossen werden, um die erforderliche Abdichtung zwischen den benachbarten Abdeckelementen der Teleskopabdeckung zu gewährleisten.

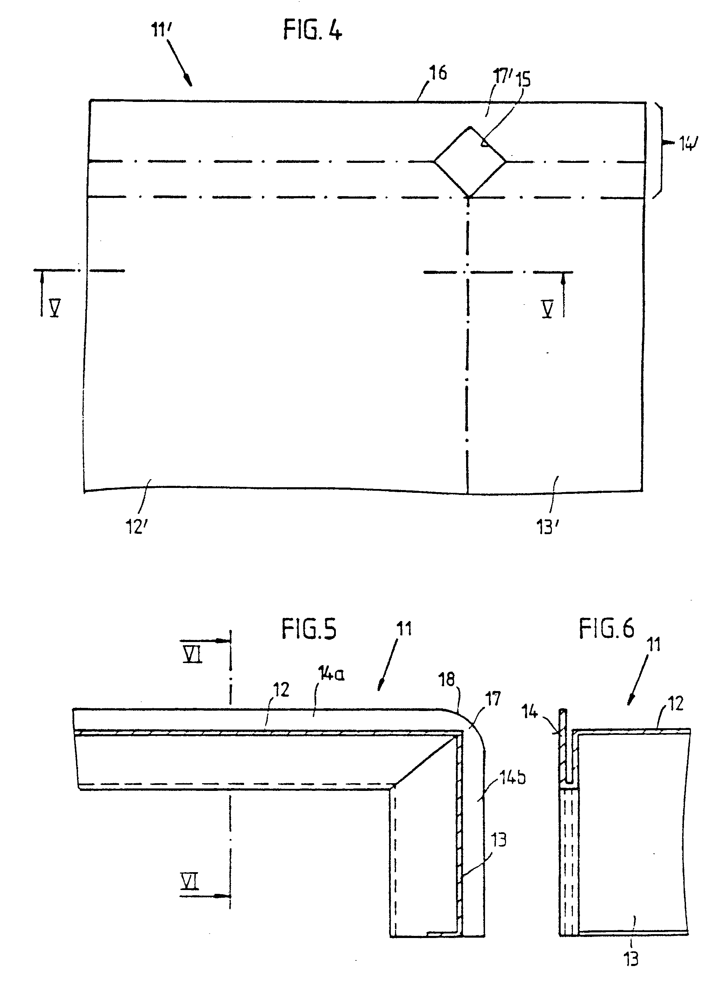

Die Fig. 4 bis 6 zeigen ein erstes Ausführungsbeispiel der Erfindung, bei dem der vorstehend erläuterte Nachteil der bekannten Ausführung vermieden ist.

Das Abdeckelement 11 besteht in gleicher Weise aus Deckwand 12, Seitenwänden 13 und einem Endbereich 14. Dieser Endbereich 14 besitzt Abschnitte 14a, 14b, die an die Deckwand 12 bzw. die Seitenwände 13 angrenzen.

Der in Fig. 4 veranschaulichte Blechzuschnitt 11' enthält eine Zone 12' (die später die Deckwand 12 bildet), Zonen 13' (die später die Seitenwände 13 bilden) sowie eine Zone 14' (die später den Endbereich 14 bildet). In der Zone 14' ist eine rautenförmige Aussparung 15 vorgesehen.

Im Unterschied zu dem bekannten Blechzuschnitt 1' (gemäß Fig. 1) ist jedoch bei dem erfindungsgemäßen Blechzuschnitt 11' (gemäß Fig. 4) die Aussparung 15 als eine geschlossene Ausnehmung hergestellt, die von der benachbarten Außenkante 16 des Blechzuschnitts 11' durch eine zusammenhängende Materialzone 17' getrennt ist.

Die Breite dieser Materialzone (gemessen in Längsrichtung der Teleskopabdeckung) wird unter Berücksichtigung der Stärke des Blechzuschnitts 11' so gewählt, daß diese Materialzone 17' beim Abkanten des Blechzuschnitts 11' rißfrei getreckt wird, wobei sich eine Eckzone 17 mit abgerundeter Außenkontur 18 ergibt.

Bei dem in den Fig. 4 bis 6 veranschaulichten Ausführungsbeispiel besitzt der Endbereich 14 die Querschnittsform eines einfachen U (vgl. Fig. 6), dessen freier Schenkel (der die Abschnitte 14a und 14b bildet) zur Außenseite des Abdeckelementes 11 hin weist.

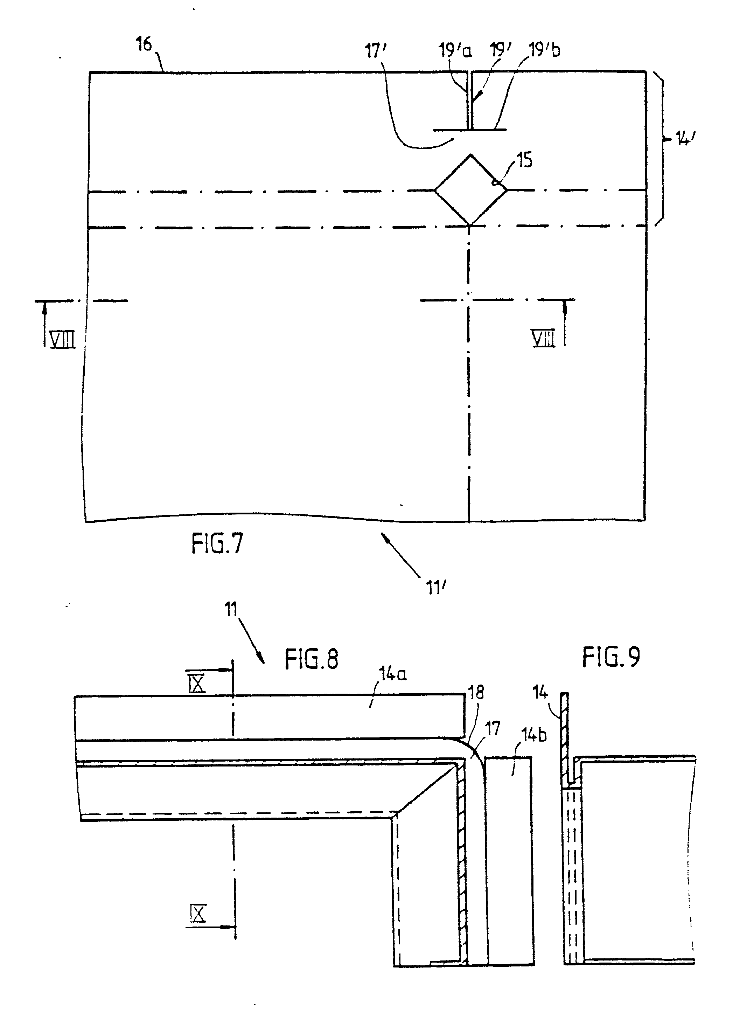

Bei dem in den Fig. 7 bis 9 veranschaulichten weiteren Ausführungsbeispiel der Erfindung sind gleiche Elemente mit denselben Bezugzeichen wie in den Fig. 4 bis 6 bezeichnet.

Die Zone 14' des Blechzuschnitts 11', die im fertigen Abdeckelement den Endbereich 14 bildet, besitzt bei diesem Ausführungsbeispiel eine größere Breite als bei der Ausführung gemäß den Fig. 4 bis 6. Zusätzlich zur Aussparung 15 ist in der Zone 14' des Blechzuschnitts 11', und zwar angrenzend an die zur Streckung bestimmte, zusammenhängende Materialzone 17', ein T-förmiger Einschnitt 19' vorgesehen, wobei der Schenkel 19'a von der genannten Materialzone 17' quer zur benachbarten Außenkante 16 der Zone 14' bis zu dieser Aussenkante 16 verläuft, während der Quersteg 19'b des T-förmigen Einschnitts 19' parallel zur benachbarten Aussenkante 16 verläuft.

Wird der in Fig. 7 veranschaulichte Blechzuschnitt 11' längs der strichpunktierten Linien abgekantet, so ergibt sich die aus den Fig. 8 und 9 ersichtliche Form. Die Materialzone 17' des Blechzuschnitts 11' wird hierbei wieder in eine Eckzone 17 mit gekrümmter Außenkontur 18 gestreckt.

Wie aus einem Vergleich der Fig. 7 und 8 deutlich wird, begrenzt der Quersteg 19'b des T-förmigen Einschnitts 19' beim Abkantvorgang die zur Streckung bestimmte zusammenhängende Materialzone 17' zur Außenseite hin.

Bei dem in den Fig. 8 und 9 dargestellten, aus dem Blechzuschnitt 11' gemäß Fig. 7 hergestellten Abdeckelement 11 besitzen die Abschnitte 14a und 14b des Endbereiches 14, die an die Eckzone 17 angrenzen, eine größere Höhe als die Eckzone 17. Eine solche Ausführung ist beispielsweise zweckmäßig, um das betreffende Abdeckelement als letztes Abdeckelement der Teleskopabdeckung mit einem Maschinenteil zu verbinden.

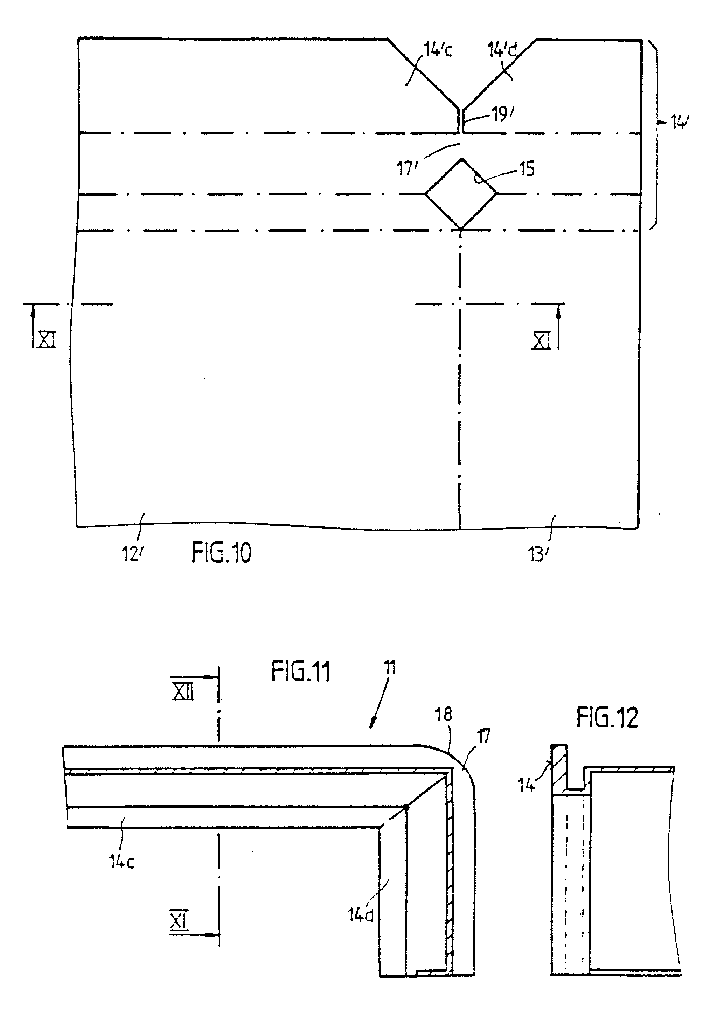

Die Fig. 10 bis 12 zeigen ein weiteres Ausführungsbeispiel der Erfindung, bei dem gleiche Elemente wieder mit denselben Bezugzeichen wie in den Fig. 4 bis 9 bezeichnet sind.

Während bei den Ausführungsbeispielen gemäß den Fig. 4 bis 9 der Endbereich 14 die Querschnittsform eines einfachen U aufweist, dessen freier Schenkel zur Außenseite des Abdeckelementes hinweist, ist bei der Ausführung gemäß den Fig. 10 bis 12 der Endbereich 14 in der Querschnittsform zweier zusammenhängender, umgekehrt gerichteter U ausgebildet (vgl. Fig. 12), deren freier Schenkel, der die Abschnitte 14c, 14d bildet, zur Innenseite des Abdeckelementes 11 hin weist.

In Hinblick auf diese doppelte Abkantung des Endbereiches 14 ist die Zone 14' des Blechzuschnitts 11' mit vergrößerter Breite ausgeführt. Die Zone 14' enthält ferner die bereits erläuterte Aussparung 15 und den T-förmigen Einschnitt 19', der von der Aussparung 15 durch die Materialzone 17' getrennt ist, die beim Abkanten des Blechzuschnitts 11' die Eckzone 17 mit abgerundeter Außenkontur 18 bildet. Angrenzend an den Einschnitt 19' sind die beiden Teilzonen 14'c und 14'd nach Art eines Gehrungsschnittes um 45° abgeschrägt.

Die Teleskopabdeckung kann aus den unterschiedlichsten Materialien hergestellt werden, insbesondere aus Metallen, Kunststoffen oder aus Verbundmaterialien (z.B. Metalle mit Kunststoffauflage). Soweit vorstehend also "Bleche" erwähnt wurden, sind hierunter nicht nur Metallbleche, sondern auch Kunststoffbleche zu verstehen.

**Ansprüche**

1. Verfahren zur Herstellung einer Teleskopabdeckung, insbesondere für Werkzeugmaschinen, bestehend aus einer Anzahl von in Längsrichtung der Teleskopabdeckung gegeneinander verschiebbaren Abdeckelementen (11), die jeweils eine Deckwand (12) und zwei Seitenwände (13) aufweisen, wobei an mindestens einem Ende jedes Abdeckelementes ein quer zur Längsrichtung der Teleskopabdeckung verlaufender, im Querschnitt mindestens einfach U-förmig abgebogener Endbereich (14) vorgesehen ist, der über die Deckwand (12) und die beiden Seitenwände (13) nach außen vorsteht, wobei das Verfahren folgende Verfahrensschritte enthält:
a) zur Herstellung von Deckwand (12), Seitenwänden (13) und U-förmigem Endbereich (14) jedes Abdeckelementes (11) findet ein einziger ebener Blechzuschnitt (11') Verwendung;
b) der ebene Blechzuschnitt (11') wird zwischen den an die beiden Seitenwände angrenzenden Abschnitten (14b) des Endbereichs (14) einerseits und dem an die Deckwand (12) angrenzenden Abschnitt (14a) des Endbereiches andererseits mit je einer rautenförmigen Aussparung (15) versehen;
c) durch Abkanten des Blechzuschnitts (11') werden die Winkel zwischen den Seitenwänden (13) und der Deckwand (12) hergestellt, der U-förmige Endbereich (14) geformt und der Winkel zwischen diesem U-förmigen Endbereich (14) und den Deck- und Seitenwänden erzeugt,
gekennzeichnet durch folgende weitere Merkmale:
d) die rautenförmige Aussparung (15) wird als eine geschlossene Ausnehmung hergestellt, die von der benachbarten, in der fertigen Teleskopabdeckung quer zur Längsrichtung der Abdeckung verlaufenden Außenkante (16) des Blechzuschnitts (11')

durch eine zusammenhängende Materialzone (17') getrennt ist;
e) die Breite dieser Materialzone (17') (in Längsrichtung der Teleskopabdeckung) wird unter Berücksichtigung der Stärke des Blechzuschnitts (11') so gewählt, daß diese Materialzone (17') beim Abkanten des Blechzuschnitts unter Bildung einer Eckzone (17) mit abgerundeter Außenkontur (18) rißfrei gestreckt wird.

2. Verfahren nach Anspruch 1 zur Herstellung einer Teleskopabdeckung, deren Abdeckelemente (11) einen Endbereich (14) aufweisen, dessen an die beiden abgerundeten Eckzonen (17) angrenzenden und über die Deckwand (13) und die beiden Seitenwände (13) vorstehenden Abschnitte (14a, 14b) eine größere Höhe als die Eckzone (17) aufweisen, gekennzeichnet durch folgenden weiteren Verfahrensschritt:
f) angrenzend an die zur Streckung bestimmte, zusammenhängende Materialzone (17') wird der ebene Blechzuschnitt (11') jeweils mit einem T-förmigen Einschnitt (19') versehen, wobei der Schenkel (19'a) des T von der genannten Materialzone (17') quer zur benachbarten Aussenkante (16) des Endbereiches (14) bis zu dieser verläuft und der Quersteg (19'b) des T parallel zur benachbarten Außenkante des Endbereiches verläuft und die zur Streckung bestimmte zusammenhängende Materialzone (17') nach dieser Außenseite hin begrenzt.

3. Teleskopabdeckung, insbesondere für Werkzeugmaschinen,
a) bestehend aus einer Anzahl von in Längsrichtung der Teleskopabdeckung gegeneinander verschiebbaren Abdeckelementen (11),
b) wobei die Abdeckelemente eine Deckwand (12) und zwei Seitenwände (13) aufweisen,
c) und an mindestens einem Ende jedes Abdeckelementes (11) ein quer zur Längsrichtung der Teleskopabdeckung verlaufender, über die Deckwand (12) und die beiden Seitenwände (13) nach außen vorstehender, im Querschnitt mindestens einfach U-förmig abgebogener Endbereich (14) vorgesehen ist,
d) wobei ferner die Deckwand (12), die Seitenwände (13) und der U-förmige Endbereich (14) durch Abkanten eines einzigen Blechzuschnitts (11') einstückig hergestellt sind, gekennzeichnet durch folgendes Merkmal:
e) die beim Abkanten des ebenen Blechzuschnitts (11') gestreckten Eckzonen (17) des Endbereichs (14) besitzen eine abgerundete Außenkontur (18).

4. Teleskopabdeckung nach Anspruch 3, dadurch gekennzeichnet, daß der Endbereich (14) die Querschnittsform eines einfachen U aufweist, dessen freier Schenkel zur Außenseite des Abdeckelementes hin weist.

5. Teleskopabdeckung nach Anspruch 3, dadurch gekennzeichnet, daß der Endbereich (14) die Querschnittsform zweier zusammenhängender, umgekehrt gerichteter U aufweist, deren freier Schenkel zur Innenseite des Abdeckelementes hin weist.

6. Teleskopabdeckung nach Anspruch 4, dadurch gekennzeichnet, daß die an die abgerundeten Eckzonen (17) angrenzenden und über die Deckwand (12) und die beiden Seitenwände (13) vorstehenden Abschnitte (14a, 14b) des Endbereichs (14) eine größere Höhe als die Eckzonen (17) aufweisen.

FIG.1

FIG.2

FIG.3

FIG. 4

FIG.5

FIG.6

EP 0 425 836 A2

FIG.7

FIG.8

FIG.9

8

14'c 14'c

19'

14'

17' 15

XI XI

12' FIG.10 13'

FIG.11 11

XII 18

17

14c

XI

14d

FIG.12

14